# EUROPÄISCHE PATENTSCHRIFT

(11) **EP 1 626 917 B1**
(45) Veröffentlichungstag und Bekanntmachung des Hinweises auf die Patenterteilung: **21.01.2009**
(21) Anmeldenummer: 04730822.6
(22) Anmeldetag: 03.05.2004
(51) Int. Cl.: B65D 90/22, B65D 90/02

(54) **SICHERHEITSBEHÄLTER MIT SCHUTZFOLIE**
SAFETY CONTAINER COMPRISING A PROTECTIVE FILM
CONTENANT DE SECURITE PRESENTANT UN FILM PROTECTEUR

(30) Priorität: 06.05.2003 DE 10320400
(43) Veröffentlichungstag der Anmeldung: 22.02.2006
(73) Patentinhaber: Schiwek, Helmut, 47057 Duisburg (DE)
(72) Erfinder: Schiwek, Helmut, 47057 Duisburg (DE)
(74) Vertreter: Borkowski, Jens
(86) Internationale Anmeldenummer: PCT/DE2004/000926
(87) Internationale Veröffentlichungsnummer: WO 2004/099037

(56) Entgegenhaltungen:
- EP-A- 0 318 072
- WO-A-94/16972
- US-A- 2 305 923

## Beschreibung

Die Erfindung betrifft einen Sicherheitsbehälter für die Lagerung und den Transport umweltgefährdender, vor allem explosionsgefährlicher, flüssiger oder zu verflüssigender Stoffe mit einem Kernbehälter mit Einfüll- und Entleerungseinrichtung sowie einer Füllung und/oder Umhüllung aus über ein umweltfreundliches Bindemittel gebundener Mineralwolle, die zu einem die Stoffe aufnehmenden und speichernden, schneidförmigen Gitterwerk geformt ist.

Derartige Sicherheitsbehälter dienen dazu, umweltgefährdende, vor allem expiosionsgefährliche Stoffe daran zu hindern, aus dem Behälter heraus in die Umwelt auszutreten. Dabei ist nach der DE-PS 594 02 232.0-08 vorgesehen, dass der Sicherheitsbehälter ein Gitterwerk aufnimmt oder von einer entsprechenden Beschichtung umhüllt ist, die aus Glaswolle besteht, die im Hochtemperaturbereich geblasen worden ist und mit einem Bindemittel zusammengehalten wird, die aus Stärke, aus einem geeigneten Harz und einem Staubbindemittel sowie Silikonharz besteht. Dieses Material bzw. dieses Gitterwerk wird zu einzelnen Blöcken oder Formen geschnitten und dann in den Behälter eingefüllt bzw, um ihn herumgelegt. Dabei wird eventuell austretendes gefährliches Material, insbesondere Kraftstoff am Austritt entweder gehindert oder aber aufgenommen und so gespeichert, dass eine Gefährdung der Umwelt nicht zu befürchten ist. Nachteilig ist allerdings, dass insbesondere beim Aufprall des Slcherheltsbehälters, also beispielsweise eines Flugzeugtanks auf einen Gegenstand oder aber eines Gegenstandes auf den Behälter so hohe Drücke entstehen, dass dann die Gefahr besteht, dass der aufgefangene oder aufgenommene Stoff doch in unbeabsichtigter Größenordnung austreten bzw. herausgeschleudert werden kann.

Auch die US 2,305,923 zeigt einen Sicherheitsbehälter, gemäß dem Oberbegriff des Anspruchs 1, wobei das Volumen des Sicherheitsbehälters in mehrere Zellen aus einem für die zu transportierende Flüssigkeit permeablen Material unterteilt ist. Jede der Zellen ist dabei mit Glaswolle gefüllt. Durch die Zellenuntertellung soll vermieden werden, dass sich die Glaswolle verlagert und ungefüllte Bereiche entstehen.

Der Erfindung liegt die Aufgabe zugrunde, einen gegen Leckagen zusätzlich geschützten Sicherheitsbehälter zu schaffen, der bezüglich Leckagen auch weitgehend gegen Aufprall von Fremdkörpern u. Ä. gesichert ist.

Die Aufgabe wird gemäß der Erfindung dadurch gelöst, dass die Füllung oder Umhüllung mit einem Netzwerk aus Gitterstreifen eingefasst ist, das gitterförmig Ober das Mineralwollematerial gelegt ist und aus üblichem Automobilsicherheitsgurtmaterial besteht.

Mit dieser Lösung ist also möglich, sowohl einen das Einfüllen des Sprites nicht behindernden Verformungsschutz für den Gesamtkörper vorzugeben, sondern auch einen einfach zu montierenden und herzustellenden Schutz. Das Netzwerk kann nach Fertigstellung der eigentlichen Tankfüllung oder der Umhüllung um dieses herumgelegt werden, um dann die beschriebene Sicherheitsfunktion optimal zu erbringen.

Insbesondere bei großen Tanks aber auch in anderen Einsatzfällen ist es zweckmäßig, wenn die einzelnen Gitterstreifen aus Sichefieitsgurtmaterlal bestehen und eine Breite von 4 bis 8 cm und eine Dicke von 2 bis 6 mm aufweisen. Diese Gitterstreifen bzw. das daraus bestehende Netzwerk sichert das darin eingebundene Glasfasermaterial, das große Mengen an Sprit und sonstigen Materialien speichern kann, ohne dass die Gefahr besteht, dass durch unbeabsichtigten oder gezielten Druck das eingefüllte gefährliche Material dann austreten kann. Dies ist insbesondere der Fall, wenn das Netzwerk mit anderen Teilen des Tanks also beispielsweise der Tankwandung in Abständen in Verbindung steht, sodass verhindert ist, dass aufgrund der Schwerkraft das Glasfasermaterial mit dem eingefüllten Sprit innerhalb des Tanks entsprechend bewegt und dann verformt wird.

Um dem gesamten Netzwerk die notwendige Steifigkeit zu geben, ist vorgesehen, dass die einzelnen Gitterstreifen an den Kreuzungspunkten miteinander verbunden sind, sodass ein wirkliches Gitterwerk bzw. gitterförmiges Netzwerk entsteht.

Weiter vorne ist bereits erwähnt worden, dass das Netzwerk das Einfüllen von Sprit in einen mit dem Gittermaterial ausgefüllten Tank möglich macht, wobei gemäß einer Weiterbildung vorgesehen ist, dass die einzelnen Gitterstreifen einen das Betanken und Entleeren nicht behindernden Abstand von vorzugsweise 5 bis 15 cm aufweisen. Damit ergeben sich ausreichend große Öffnungen zwischen den einzelnen Gitterstreifen, sodass die Funktion voll erfüllt werden kann.

Auch bei dieser Ausbildung ist es von Vorteil, wenn die vom Netzwerk umfasste Mineralwolle vorzugsweise durch Zugabe eines höheren Anteils Bindemittel bleibend auf 30 bis 60 kg/m³ verdichtet ist. Das Kernmaterial bzw. das Glasfasermaterial verfolgt somit aus sich heraus schon über eine hohe Steifigkeit, die noch dadurch unterstützt wird, dass das Netzwerk die Mineralwolle sicher umfasst. Unabhängig davon, ob nur das aus Gitterstreifen bestehende Netzwerk zum Schutz des Mlneralwollepaketes eingesetzt wird oder aber die elastische Schutzhaut, ist es vorteilhaft für die Gesamtverarbeitung, wenn wie erfindungsgemäß vorgesehen, die für die Füllung oder Umhüllung einzusetzenden Mineralfasern die Qualität KI 40 aufweisen, also aus krebsverdachtsfrejen Einzeffasem bestehen. Diese krebsverdachtsfreien Einzelfasern bauen sich im Körper selbsttätig ab, sodass auch dann, wenn unvorhergesehener maßen Mitarbeiter solche feinen bis feinsten Glasfasern einatmen eine Gefährdung durch Krebs oder ähnliche Erkrankungen nicht besteht.

Insbesondere bei der Umhüllung von Schutzrohren ist es vorteilhaft, wenn die als Umhüllung dienende Glaswolle auf eine Aluhaut aufkaschiert ist und dann um das Rohr gelegt und endseitig mit dem anderen Ende verbunden wird. Diese Aluhaut verstärkt nicht nur das Glaswollepaket, das als Umhüllung dient, sondern es erleichtert auch die Montage, weil dann mit Klebestreifen gearbeitet werden kann, die sich an der Aluhaut sicher ankleben lassen und dann für eine wirksame Umhüllung des Glaswollepakets und Absicherung durch die Aluhaut Sorge tragen. Die Aluhaut isoliert darüber hinaus zusätzlich und wirkt als Wetter- bzw. Klimaschutz, sodass hier eine Mehrtachfunktion erreicht werden kann.

Dort, wo mit besonderen Beanspruchungen gerechnet werden muss, wie beispielsweise bei Flugzeugtanks, ist es von Vorteil, wenn die Füllung oder Umhüllung aus Mineralwolle mit einerer elastischen Schutzhaut von einem die Verformung einschränkenden, vorzugsweise verhindernden Netzwerk aus Sicherheitsgurtmaterial umgeben ist. Dieses Sicherheitsgurtmaterial lässt eine Dehnung praktisch nicht zu, dagegen aber eine gewisse Verformung, sodass die gestellte Aufgabe, nämlich das unbeabsichtigte oder unkontrollierte Austreten von Sprit aus dem Gesamtkörper zu verhindern, gelöst wird. Hier wird durch das Sicherheitsgurtmaterial bzw. das Netzwerk aber sichergestellt, dass eine Verformung nicht soweit eintreten kann, dass dadurch ein Zusammenpressen des Gesamtkörpers auftritt und dann das gefährdende Material doch austritt. Das Netzwerk kann dazu mit der umgebenden Tankwandung verbunden werden, was das Verformen des Gesamtkörpers zusätzlich unterbindet.

Um eine "Doppelhaut" zu vermeiden und um die gesamte Absicherung des Gesamtkörpers noch optimaler sicher zu stellen ist es vorteilhaft, wenn das Netzwerke die elastische Schutzhaut integriert ist. Eine solche Ausbildung sorgt dann, wie schon erwähnt, dafür, dass sich der Gesamtkörper nur sehr beschränkt verformen kann, sodass über die Schutzhaut abgesichert ein Austreten des gelagerten Sprit oder sonstigen gefährdenden Materials unterbunden ist.

Weiter vorne ist bereits erwähnt worden, dass das Netzwerk aus Sicherheitsgurtmaterial bestehen soll, wobei ergänzend vorgesehen ist, dass die einzelnen Streifen des Netzwerks einen üblichen Automobilsicherheitsgurten entsprechende Abmessung bezüglich Breite und Dicke aufweisen. Hier hat man Erfahrungen mit berücksichtigt, die aus dem Automobilbau stammen. Die dort eingesetzten Sicherheitsgurte können auch extreme Aufpralle so abmildern, dass die gesicherte Person möglichst unbeeinflusst bleibt, also hier der entsprechende Tank oder ähnliches mehr.

Nach einer anderen Ausbildung der Erfindung ist es auch möglich, nur die Schutzhaut vorzusehen. Die Erfindung lehrt dementsprechend, dass die Füllung oder Umhüllung aus Mineralwolle über die Zugabe eines höheren Anteils des umweltfreundlichen Bindemittels bleibend hoch verdichtet und mit der das Gitterwerk ganz oder teilweise einfassenden, elastischen Schutzhaut versehen ist.

Zunächst einmal wird das Material, insbesondere dann, wenn es als Umhüllung beispielsweise für eine Rohrleitung vorgesehen ist, höher verdichtet, beispielsweise auf 30 - 60 kg/m³ und dann mit dem umweltfreundlichen Bindemittel versehen, sodass die Verdichtung auch bleibend gewährleistet bzw. dass sie überhaupt erreichbar ist Dieses entsprechende Gitterwerk kann dann sowohl in entsprechende Behälter eingefüllt oder um eine Rohrleitung herumgelegt werden, wobei es dann zusätzlich durch die Schutzhaut, die das Gitterwerk elastisch umgibt, entsprechend zusätzlich gehindert ist. Würde nun ein Gegenstand auf den Sicherheitsbehälter auftreffen oder würde der Sicherheitsbehälter irgendwo gegen geschleudert, sichert die elastische Schutzhaut das eingefüllte oder aufgenommene Material, insbesondere den Kraftstoff und hindert ihn gleichzeitig, unkontrolliert auszutreten. Denkbar wäre es theoretisch auch, das Bindemittel elastisch auszubilden, um so die gesamte Füllung oder Umhüllung elastisch zu formen, doch bringt dies mehrere Probleme, sodass die Umhüllung mit einer solchen elastischen Schutzhaut Vorteile bietet. Die elastische Schutzhaut, die das Gitterwerk ganz oder teilweise einfasst, sorgt dafür, dass bei einem solchen Aufprall sich der gesamte Körper, d. h. das Gitterwerk plus die einfassende Schutzhaut elastisch formt, ohne dass der eingefüllte Sprit oder das sonstige empfindliche Material austreten kann. Eine teilweise Einfassung der elastischen Schutzhaut ist dann vorteilhaft und zweckmäßig, wenn dieses Gesamtpaket in einen Tank eingefüllt und ein Eintreten des Sprits in das Gitterwerk durch die Schutzhaut nicht behindert werden soll. Vorteilhaft ist insbesondere, dass auch die feinsten Mineral- bzw. Glasfasern zurückgehalten werden und weder für die Ventile noch sonstige Bauteile eine Gefährdung darstellen.

Nach einer zweckmäßigen Ausbildung ist vorgesehen, dass die Schutzhaut aus einem extrem dehnfähigen Latex, Polyurethanfolie, einer PVC-Weichfolie oder ähnlich wirkende, zugleich abdichtende Folie hergestellt ist, die am Gitterwerk dicht anliegend angeordnet, vorzugsweise angeklebt ist. Insbesondere Latex und die Polyurethanfolie haben die Wirkung, dass sie sehr stark dehnfähig sind, also bei entsprechender Belastung sich so weit verformen, dass der eingefüllte Kraftstoff oder das sonstige Material nicht austreten kann. Würde aber eine örtliche Belastung doch dazu führen, dass die Folie einreißt, so würde nur eine geringste Menge austreten und die Gefährdung damit sehr stark eingeschränkt sein, wenn sie überhaupt gegeben ist.

Insbesondere bei einer Verwendung von Glasfasern und dabei auch noch sehr feinen Glasfasern, die sich vorteilhaft hier für den vorgesehenen Einsatzfall eignen, weil sie eine extrem große Oberfläche bieten, um die Kraftstoffe oder sonstigen aufzunehmenden Stoffe zu lagern, ist die Gefahr da, dass insbesondere auch vor dem Einfüllen des Kraftstoffes einzelne Fasern sich lösen und dann mit dem Kraftstoff verbinden und eventuell sogar beim Entleeren des Sicherheitsbehätters mit austreten. Dies verhindert man dadurch, dass das Gitterwerk insgesamt oder abschnittsweise in Form von Vlieskissen in den Kernbehälter eingefüllt und dann insgesamt mit der Schutzhaut ausgerüstet ist Diese Vliesstoffe oder Vlieskissen sorgen dafür, dass eventuell sich lösende Feinstmineralstoffteile festgehalten werden und sich nicht mit dem des Vlieskissen durchdringenden Kraftstoff austreten und zu eventuellen Problemen führen. Damit erübrigt sich die Nachordnung von aufwendigen Filtern, die die Pumporgane und die Verbrennungsorgane schützen sollen. Es ist auch denkbar, dass hier auf die Schutzhaut ganz verzichtet werden kann, weil die Vlieskissen natürlich auch, wenn auch eingeschränkt, dafür sorgen, dass sich der gesamte Körper aus dem Gitterwerk beim Auftreffen von Fremdstoffen verformen kann, ohne dass das eingefüllte Material Insbesondere der Sprit dann automatisch sofort austritt.

Insbesondere zur Sicherung von Rohrleitungen, beispielsweise Pipelines ist es vorteilhaft, wenn das Gitterwerk zu Rohrabschnitten geformt und von der Schutzhaut eingefasst ausgebildet ist. Dabei ist es denkbar und auch möglich, die entsprechenden Rohrabschnitte auf die vorhandene Pipeline aufzuschieben und so zu sichern, was gerade bei langen Pipelines den Vorteil hat, dass eine Gefährdung der Umwelt damit ausgeschlossen werden kann. Die Rohrabschnitte haben insbesondere bei entsprechender Verdichtung den Vorteil, dass sie selbst standfest sind, also entsprechend gelagert und gehandelt werden können. Die Schutzhaut sorgt dann dafür, dass eventuell in das Gitterwerk einlaufende Kraftstoffe auch bei Auftreffen von Gegenständen nicht einfach austreten können. Vielmehr ist auch ohne einen zusätzlichen Blechmantel eine Sicherung geschaffen, wobei der Blechmantel in der Regel aber doch zum Einsatz kommt, schon um die ganze Rohrleitung auch gegen sonstige, beispielsweise auch klimatische Einflüsse zu schützen.

Ein zur zusätzlichen klimatischen und sonstigen Sicherung der aufgeschobenen Rohrabschnitte und auch um das Aufschieben zu erleichtern, sieht die Erfindung vor, dass das Gitterwerk bzw. die auf die Rohrleitung aufgeschobenen Rohrabschnitte insgesamt von außen von einem Blechmantel und vorzugsweise innen von einer Gleitbeschichtung abgedeckt sind. Je nach Einsatzzweck und Entleerungsmöglichkeit kann es auch zweckmäßig sein, dass das Gitterwerk in die Vlieskissen eingefüllt ist und dann einzeln, d. h. kissenweise mit der elastischen Schutzhaut umhüllt ist. Dann wird es allerdings erforderlich, bel größeren Sicherheitsbehältern von Kissen zu Kissen Ent- und Befülleinrichtungen vorzusehen oder aber nur eine entsprechende Beschichtung zu verwenden.

Die Erfindung zeichnet sich insbesondere dadurch aus, dass ein Sicherheitsbehälter und auch Rohrleitungen geschaffen sind, die bezüglich der eingefüllten Stoffe eine zusätzliche Leckagesicherung aufweisen und auch gegen Druckbeaufschlagung vorteilhaft gesichert sind, was insbesondere in Kollisionsfällen auftritt. Es muss sich also nicht um die Extrembeanspruchung wie beim Anschlag auf das World Trade Centre in New York handeln, sondern auch schon um kleinere Extrembelastungen beispielsweise bei einer Notlandung eines Flugzeuges. Mit Hilfe des erfindungsgemäßen Sicherheitsbehälters ist es möglich, sicherzustellen, dass die eingefüllten Stoffe auch wirklich in dem Gitterwerk aus Mineralwolle verbleiben, auch wenn sich dieser versucht zu verformen oder auch teilweise verformt. Wird die elastische Schutzhaut eingesetzt, so kann sich das Gitterwerk sogar gezielt verformen, weil sich die elastische Schutzhaut mitverformt und das eingefüllte Material in dem Gewitterwerk absichert und dort hält. Die zusätzlich eingebrachten Streifen bzw. Gitterstreifen des Netzwerks sorgen dafür, dass die elastische Schutzhaut nicht zu stark beansprucht wird oder aber, dass auf eine Schutzhaut verzichtet werden kann, wenn das Austreten feinster Fasern nicht gefährlich ist oder sonstige Gründe dafür sprechen, auf die elastische Schutzhaut zu verzichten. Insgesamt gesehen ist ein "Sicherheitsbehälter" geschaffen, der in dieser Form bisher unbekannt war und der auch bei extremen Beanspruchungen seinem Namen Ehre macht.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Schnitt durch einen Sicherheitsbehälter mit Gitterwerk,
- Figur 2: einen Schnitt durch eine Rohrleitung mit Umhüllung,
- Figur 3: einen Schnitt durch ein Vlieskissen,
- Figur 4: eine perspektivische Darstellung einer Rohrleitung mit Sicherung und
- Figur 5: eine Rohrleitung mit Netzwerk und
- Figur 6: einen Schnitt durch ein Gitterwerk bzw. ein Glaswollepaket mit Aluhaut

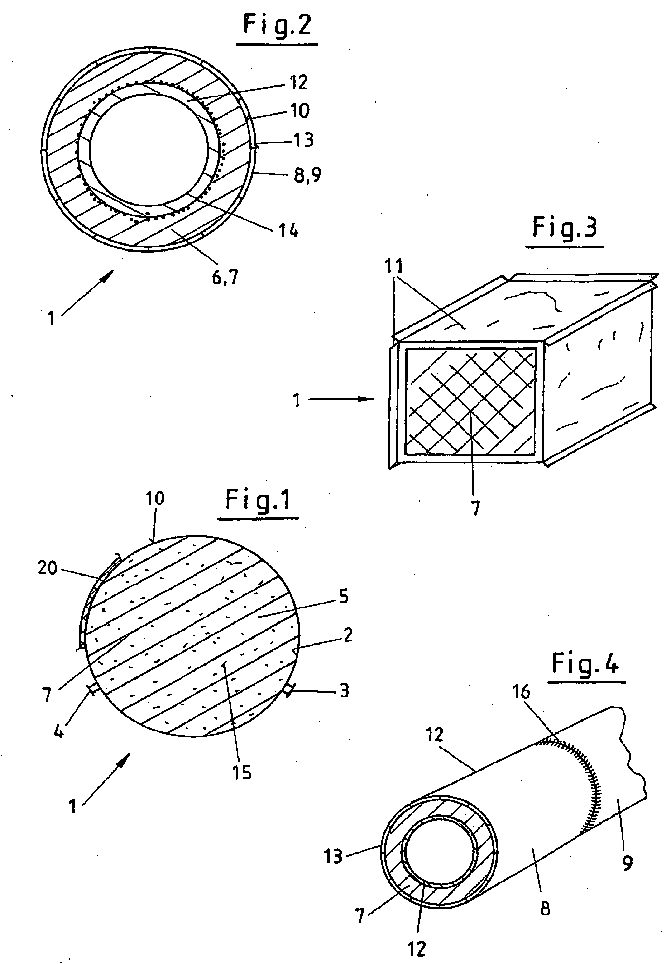

Figur 1 zeigt einen Sicherheitsbehälter 1, dessen Kernbehälter 2 mit einer Einfülleinrichtung 3, sowie einer Entleerungseinrichtung 4, hier einfach in Form von Stutzen, die an eine Pumpe sowohl zum Befüllen wie auch zum Entleeren angeschlossen werden können. Die Füllung 5 besteht aus einem Gitterwerk 7 aus Mineralwolle, vorzugsweise Glaswolle, wobei dieses Gitterwerk 7 aus einer auf 30 - 60 kg/m³ verdichteten Glasfaser besteht, dass durch eine umweltfreundliches Bindemittel geformt ist. Während man üblicherweise etwa 6 % Bindemittel zugibt, ist hier die Menge des Bindemittels auf rund 12 % erhöht worden, um so auch die höhere Dichte zu erreichen und abzusichern. Diese höhere Dichte ist insbesondere dann vorteilhaft, wenn gemäß Figur 2 eine Umhüllung 6 vorgegeben wird, bei der beispielsweise mehrere Rohrabschnitte 8, 9 gemäß Figur 4 die Rohrleitung 12 umgeben.

Sowohl die Umhüllung 6 wie die Füllung 5 weist außen eine Schutzhaut 10 auf, die aus Latex, Polyurothanfolie oder einer PVC-Weichfolie oder einer ähnlichen Folie besteht. Diese Schutzhaut 10 umfasst das Gitterwerk 7 und ermöglicht es diesem, bei Aufprall oder sonstiger Belastung sich zu verformen, ohne dass die eingefüllten Stoffe, insbesondere der Kraftstoff 15 austreten kann. Selbst wenn aufgrund einer Überlast die Schutzhaut 10 beschädigt werden sollte, platzt sie nur in einem geringen Bereich auf und lässt dann auch nur eine geringe Menge von Kraftstoff 15 frei. Vorteilhaft ist aber der zusätzliche Leckageschutz, der auf jeden Fall erreicht wird.

In Figur 1 angedeutet ist auch, dass die Schutzhaut 10 und der in die Füllung 5 eingefüllte Kraftstoff 15 durch ein Gitterwerk beispielsweise auch Sicherheitsgurten zusätzlich gesichert ist. Das Netzwerk 20 ist nur angedeutet wiedergegeben,

Figur 3 zeigt eine besondere Ausführung, weil hier das Gitterwerk 7 hier in ein Vlieskissen 11 eingefüllt, um das Austreten einzelner Fasern zu vermeiden und damit das Anbringen von zusätzlichen Filtern überflüssig zu machen.

Bezüglich der Figuren 2 und 4 ist noch darauf hinzuweisen, dass die Umhüllung 6 hier aus einzelnen Rohrabschnitten 8, 9 besteht, auf die ein Blechmantel 13, vorzugsweise ein durchgehender Blechmantel 13 aufgeschoben ist. Dieser Blechmantel 13 ermöglicht durch Schweißungen 16 einen durchgehenden Schutz, wobei eine aufgebrachte Gleitbeschichtung 14 dafür sorgt, dass die einzelnen Rohrabschnitte 8, 9 leichter auf die Rohrleitung 12 aufgeschoben werden können.

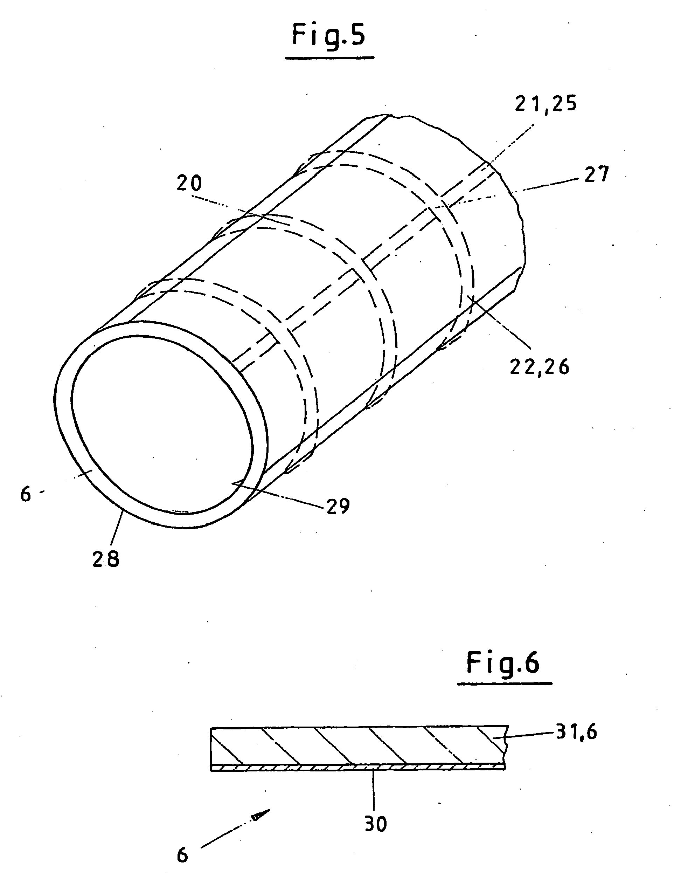

Figur 5 wiederum zeigt eine der Figur 4 vergleichbare Ausführung, wobei hier das Rohr 28 mit einer Umhüllung 6 wiedergegeben ist, sodass die Rohrwandung 29 nach außen hin abgesichert ist. Diese Umhüllung 6, hier aus dem schon mehrfach erwähnten Glasfasermaterial ist nach außen hin zusätzlich durch ein Netzwerk aus einer Art Sicherheitsgurt abgesichert. Dieses Netzwerk verfügt über Streifen 21, 22, die senkrecht und waagerecht verlaufen und die absichern, dass das darunter liegende Material der Umhüllung zusammengehalten wird und auch bei einer Druckbeanspruchung sich nicht von seiner vorgesehenen Einsatzstelle absetzen kann.

Nach einer Weiterbildung kann dieses Netzwerk 20 auch ohne eine zusätzliche Schutzhaut 10 verwendet werden, wobei dann die einzelnen Gitterstreifen 25, 26 zweckmäßigerweise an den Kreuzungspunkten 27 miteinander verbunden sind, sodass ein sehr stabiles Schutznetz erreicht ist, dass auch dann für die notwendige Sicherung der Umhüllung 6 Sorge trägt, wenn auf eine Schutzhaut aus irgendwelchen Gründen verzichtet worden ist oder verzichtet werden kann.

Statt der erwähnten Schutzhaut 10 ist nach Figur 6 vorgesehen, dass eine Aluhaut 30 zum Einsatz kommt, auf die die Glaswolle 31 aufkaschiert ist, sodass sich eine dicke Umhüllung 6 ergibt, die auf die Rohrwandung 29 aufgelegt und zwar so, dass die Aluhaut 30 nach außen sieht. Diese Aluhaut 30 kann dann über das Netzwerk 20 zusätzlich abgesichert werden oder es können auch Klebestreifen verwendet werden, die die Teile der Aluhaut 30 so miteinander verbinden, dass sich insgesamt ein geschlossener Schutzmantel ergibt. Die Aluhaut 30 wirkt nicht nur als Trägermaterial sondern gleichzeitig auch als eine Art Schutzmantel, als Regenschutz und auch als Sonnenschutz, sodass insbesondere bei Rohrleitungen, beispielsweise für den Transport von Erdöl sich ein solcher Schutz in mehrfacher Hinsicht positiv auswirkt.

## Patentansprüche

1. Sicherheitsbehälter für die Lagerung und den Transport umweltgefährdender, vor allem explosionsgefährlicher, flüssiger oder zu verflüssigender Stoffe mit einem Kornbehälter (2) mit Einfüll- und Entleerungseinrichtung (3, 4) sowie einer Füllung (5) und/oder Umhüllung (6) aus über ein umweltfreundliches Bindemittel gebundener Mineralwolle, die zu einem die Stoffe aufnehmenden und speichernden, schneidfömigen Gitterwerk (7) geformt ist,
**dadurch gekennzeichnet,**
**dass** die Füllung (5) oder Umhüllung (6) mit einem Netzwerk (20) aus Gitterstreifen (25, 26) eingefasst ist, das gitterförmig über das Mineralwollematerial gelegt ist und aus üblichem Automobilsicherheitsgurtmaterial besteht.

2. Sichenieitsbehätter nach einem der vorhergehenden Ansprüche,
**dadurch gekennzeichnet,**
**dass** die einzelnen Gitterstreifen (25, 26) an den Kreuzungspunkten (27) miteinander verbunden sind.

3. Sicherheitsbehälter nach einem der vorhergehenden Anspruche,
**dadurch gekennzeichnet,**
**dass** die einzelnen Gitterstreifen (25, 26) einen das Betanken und Entleeren nicht behindernden Abstand von vorzugsweise 5 bis 15 cm aufweisen.

4. Sicherheitsbehälter nach einem der vorhergehenden Ansprüche,
**dadurch gekennzeichnet,**
**dass** die vom Netzwerk (20) umfasste Mineralwolle vorzugsweise durch Zugabe eines höheren Anteils Bindemittel bleibend auf 30 bis 60 kg/m³ verdichtet ist.

5. Sicherheitsbehälter nach einem der vorhergehenden Ansprüche,
**dadurch gekennzeichnet,**
**dass** die für die Füllung (5) oder Umhüllung (6) einzusetzenden Mineralfasern die Qualität Kl 40 aufweisen, also aus krebsverdachtsfreien Einzelfasern bestehen.

6. Sicherheitsbehälter nach einem der vorhergehenden Ansprüche,
**dadurch gekennzeichnet,**
**dass** die als Umhüllung (6) dienende Glaswolle (31) auf eine Aluhaut (30) aufkaschiert ist und dann um das Rohr (28) gelegt und endseitig mit dem anderen Ende verbunden wird.

7. Sicherheitsbehätter nach einem der vorhergehenden Ansprüche,
**dadurch gekennzeichnet,**
**dass** die Füllung (5) oder Umhüllung (6) aus Mineralwolle mit einer elastischen Schutzhaut (10) von einem die Verformung einschränkenden, vorzugsweise verhindernden Netzwerk (20) aus Sicherheitsgurtmaterial umgeben ist.

8. Sichefieitsbehälter nach Anspruch 7,
**dadurch gekennzeichnet,**
**dass** das Netzwerk (20) in die elastische Schutzhaut (10) integriert ist.

9. Sicherheitsbehälter nach einem der vorhergehenden Ansprüche,
**dadurch gekennzeichnet,**
**dass** die einzelnen Streifen (21, 22) des Netzwerkes (20) eine üblichen Automobilsicherheitsgurten entsprechende Abmessung bezüglich Breite und Dicke aufweisen.

10. Sicherheitsbehälter einem der vorhergehenden Ansprüche,
**dadurch gekennzeichnet,**
**dass** die Füllung (5) oder Umhüllung (6) aus Mineralwolle über die Zugabe eines höheren Anteils des umweltfreundlichen Bindemittels bleibend hoch verdichtet und mit der das Gitterwerk (7) ganz oder teilweise einfassenden, elastischen Schutzhaut (10) versehen ist.

11. Sicherheitsbehätter nach einem der vorhergehenden Ansprüche,
**dadurch gekennzeichnet,**
**dass** die Schutzhaut (10) aus einem extrem dehnfähigen Latex, Polyurethanfolie, einer PVC-Weichfolie oder ähnlich wirkenden, zugleich abdichtenden Folie hergestellt ist, die am Gitterwerk (7) dicht anliegend angeordnet, vorzugsweise angeklebt ist.

12. Sicherheitsbehälter nach einem der vorhergehenden Ansprüche,
**dadurch gekennzeichnet,**
**dass** das Gitterwerk (7) insgesamt oder abschnittsweise in Form von Vlieskissen (11) in den Kernbehälter (2) eingefüllt und dann insgesamt mit der Schutzhaut (10) ausgerüstet ist.

13. Sicherheitsbehätter nach einem der vorhergehenden Ansprüche,
**dadurch gekennzeichnet,**
**dass** das Gitterwerk (7) zu Rohrabschnitten (8, 9) geformt und von der Schutzhaut (10) eingefasst ausgebildet ist.

14. Sicherheitsbehälter nach Anspruch 13,
**dadurch gekennzeichnet,**
**dass** das Gitterwerk (7) bzw. die auf die Rohrleitung (12) aufgeschobenen Rohrabschnitte (8, 9) insgesamt von außen von einem Blechmantel (13) und vorzugsweise innen von einer Gleitbeschichtung (14) abgedeckt sind.

15. Sicherheitsbehälter nach einem der vorhergehenden Ansprüche,
**dadurch gekennzeichnet,**
**dass** das Gitterwerk (7) in die Vlieskissen (11) eingefüllt ist und dann einzeln, d. h. kissenweise mit der elastischen Schutzhaut (10) umhüllt ist.

## Claims

1. Safety container for the storage and transport of environmentally harmful, particularly explosive liquid or liquefying materials, with a core container (2) with filling and emptying device (3, 4) and a filling (5) and/or covering (6) made of mineral wool bonded by an environmentally friendly binder, which is in the form of a cutter shaped lattice work (7), which takes up and stores the materials,
**characterised in that**
the filling (5) or covering (6) is enclosed by a network (20) made of lattice strips (25, 26), which is laid over the mineral wool material in the shape of a lattice and is made of standard car safety belt material.

2. Safety container according to one of the previous claims,
**characterised in that**
the individual lattice strips (25, 26) are connected to each other at crossing points (27).

3. Safety container according to one of the previous claims,
**characterised in that**
the individual lattice strips (25, 26) are at a distance of preferably 5 to 15 cm, which does not hinder filling and emptying.

4. Safety container according to one of the previous claims,
**characterised in that**
the mineral wool surrounded by the network (20) is compressed permanently to 30 to 60 kg/m³, preferably by adding a high proportion of binder.

5. Safety container according to one of the previous claims,
**characterised in that**
the mineral fibres to be used for the filling (5) or covering (6) are of quality class 40, that is they consist of individual fibres, which are not suspected of causing cancer.

6. Safety container according to one of the previous claims,
**characterised in that**
the glass wool (31) used for the covering (6) is laminated onto an aluminium skin (30) and then laid around the pipe (28) and connected at the ends with the other end.

7. Safety container according to one of the previous claims,
**characterised in that**
the filling (5) or covering (6) made of mineral wool with a flexible protective skin (10) is surrounded by a network (20) made of safety belt material, which limits, preferably prevents, distortion.

8. Safety container according to claim 7,
**characterised in that**
the network (20) is integrated into the flexible protective skin (10).

9. Safety container according to one of the previous claims,
**characterised in that**
the individual strips (21, 22) of the network (20) have the standard dimensions of car safety belts with reference to width and thickness.

10. Safety container according to one of the previous claims,
**characterised in that**
the filling (5) or covering (6) made of mineral wool is permanently highly compressed by adding a high proportion of environmentally friendly binder and is provided with the flexible protective skin (10), which completely or partly encloses the lattice work (7).

11. Safety container according to one of the previous claims,
**characterised in that**
the protective skin (10) is made of an extremely stretchable latex, polyurethane film, soft PVC film or similar film, which has the same effect and also seals, which is arranged lying closely on the lattice work (7), preferably stuck to it.

12. Safety container according to one of the previous claims,
**characterised in that**
the lattice work (7) is put into the core container (2) as a whole or in sections in the form of non-woven pads (11) and then equipped with the protective skin (10) as a whole.

13. Safety container according to one of the previous claims,
**characterised in that**
the lattice work (7) is made in the form of pipe sections (8, 9) and made so that it is enclosed by the protective skin (10).

14. Safety container according to claim 13,
**characterised in that**
the lattice work (7) or pipe sections (8, 9) pushed onto the pipework (12) are covered on the exterior as a whole by a sheet metal jacket (13) and preferably inside by an antifriction coating (14).

15. Safety container according to one of the previous claims,
**characterised in that**
the lattice work (7) is put into the non-woven pads (11) and then surrounded individually, that is pad by pad, by the flexible protective skin (10).

## Revendications

1. Contenant de sécurité pour le stockage et le transport de matières dangereuses pour l'environnement, notamment explosives, liquides ou à liquéfier doté d'un récipient central (2) équipé d'un dispositif de remplissage et de vidange (3, 4) ainsi que d'un rembourrage (5) et/ou d'une gaine (6) composé(s) d'une laine minérale liée par un liant écologique et formée en un treillis (7) en forme de découpe emmagasinant et logeant les matières,
**caractérisé en ce que** le rembourrage (5) ou la gaine (6) est intégré(e) avec un maillage (20) en bandes de grille (25, 26), placé sur la matière en laine minérale en forme de grille et se composant d'une matière de ceinture de sécurité automobile classique.

2. Contenant de sécurité selon l'une quelconque des revendications précédentes, **caractérisé en ce que** les différentes bandes de grille (25, 26) sont reliées les unes aux autres aux points d'intersection (27).

3. Contenant de sécurité selon l'une quelconque des revendications précédentes, **caractérisé en ce que** les bandes de grille individuelles (25, 26) sont espacées de préférence de 5 à 15 cm ce qui n'empêche ni le remplissage ni la vidange.

4. Contenant de sécurité selon l'une quelconque des revendications précédentes, **caractérisé en ce que** la laine minérale comprise par le maillage (20) est étanchée de préférence en ajoutant une portion supérieure de liant tout en restant à niveau compris entre 30 et 60 kg/m³.

5. Contenant de sécurité selon l'une quelconque des revendications précédentes, **caractérisé en ce que** les fibres minérales à employer pour le rembourrage (5) ou la gaine (6) présentent la qualité K140, c'est-à-dire qu'elles se composent de fils élémentaires non cancérogènes.

6. Contenant de sécurité selon l'une quelconque des revendications précédentes, **caractérisé en ce que** la laine de verre (31) servant de gaine (6) est stratifiée sur une pellicule d'aluminium (30), puis placée autour du tube (28) avant d'être reliée côté extrémité à l'autre extrémité.

7. Contenant de sécurité selon l'une quelconque des revendications précédentes, **caractérisé en ce que** le rembourrage (5) ou la gaine (6) en laine minérale avec un film protecteur (10) élastique est entouré(e) par un maillage (20) en matière de ceinture de sécurité limitant et empêchant de préférence la déformation.

8. Contenant de sécurité selon la revendication 7,
**caractérisé en ce que** le maillage (20) est intégré dans le film protecteur élastique (10).

9. Contenant de sécurité selon l'une quelconque des revendications précédentes, **caractérisé en ce que** les différentes bandes (21, 22) du maillage (20) présentent une dimension correspondant à des ceintures de sécurité automobile classiques en termes de largeur et d'épaisseur.

10. Contenant de sécurité selon l'une quelconque des revendications précédentes, **caractérisé en ce que** le rembourrage (5) ou la gaine (6) en laine minérale continue à assurer une bonne étanchéité à condition d'ajouter une portion plus élevée de liant écologique et est dotée du film protecteur (10) élastique, encadrant partiellement ou complètement le treillis (7).

11. Contenant de sécurité selon l'une quelconque des revendications précédentes, **caractérisé en ce que** le film protecteur (10) est produit à partir d'un latex extrêmement extensible, d'un film de polyuréthane, d'une feuille plastifiée en PVC ou d'une feuille agissant de la même manière et ayant les mêmes propriétés d'étanchement qui est disposée, de préférence collée, hermétiquement sur le treillis (7).

12. Contenant de sécurité selon l'une quelconque des revendications précédentes, **caractérisé en ce que** le treillis (7) est rempli en tout ou par section sous la forme de matelas de fibres (11) dans le contenant central (2) et est équipé dans son ensemble du film protecteur (10).

13. Contenant de sécurité selon l'une quelconque des revendications précédentes, **caractérisé en ce que** le treillis (7) est formé en sections tubulaires (8, 9) et est conçu en étant incorporé par le film protecteur (10).

14. Contenant de sécurité selon la revendication 13,
**caractérisé en ce que** le treillis (7) et/ou les sections tubulaires (8,9) enfoncé(s) sur la tuyauterie rigide (12) sont recouverts dans leur ensemble par l'extérieur par une enveloppe de tôle (13) et de préférence à l'intérieur par un revêtement lisse (14).

15. Contenant de sécurité selon l'une quelconque des revendications précédentes, **caractérisé en ce que** le treillis (7) est rempli dans le matelas de fibres (11), puis est enveloppé individuellement, c'est-à-dire par coussin avec le film protecteur élastique (10).
